# EUROPEAN PATENT SPECIFICATION

(11) **EP 3 274 191 B1**
(45) Date of publication and mention of the grant of the patent: **30.01.2019**
(21) Application number: 16722372.6
(22) Date of filing: 25.03.2016
(51) Int. Cl.: B60C 19/00

(54) **DEVICE FOR MONITORING THE OPERATION OF A TYRE AND MONITORING METHOD USING SUCH DEVICE**
VORRICHTUNG ZUR ÜBERWACHUNG DES BETRIEBS EINES REIFENS UND ÜBERWACHUNGSVERFAHREN UNTER VERWENDUNG SOLCH EINER VORRICHTUNG
DISPOSITIF POUR SURVEILLER LE FONCTIONNEMENT D'UN PNEU ET PROCÉDÉ DE SURVEILLANCE EMPLOYANT UN TEL DISPOSITIF

(30) Priority: 25.03.2015 IT UB20150337
(43) Date of publication of application: 31.01.2018
(73) Proprietor: Provana Quality Center Srl, 26013 Crema (CR) (IT)
(72) Inventor: PROVANA, Agostino, 26010 Izano (CR) (IT)
(74) Representative: Robba, Pierpaolo
(86) International application number: PCT/IB2016/051721
(87) International publication number: WO 2016/151544

(56) References cited:
- JP-A- 2007 278 801
- US-B2- 7 150 187

## Description

### Technical Field

The present invention relates generally to a device for monitoring the operation of a tyre.

More particularly, the present invention relates to a device for detecting slippage between a tyre of the tubeless type and a respective rim.

The invention further relates to a method for monitoring the operation of the tyre equipped with such device.

### Prior Art

In the field of vehicles using tyres, which vehicles are also referred to as rubber-tyred vehicles, it is known to use devices capable of monitoring parameters related to the operation of the tyres.

Use of such devices allows to signal to the driver possible anomalies related to the operation of tyres, such as, for instance, pressure or temperature values that are non-compliant and deteriorate or entirely jeopardize the quality and safety of driving a vehicle.

Among the anomalies related to the operation of a tyre there is the slippage between the tyre and its respective rim. In the automotive field, such slippage usually has catastrophic consequences, causing remarkable damages to the tyre/rim system and almost entirely jeopardizing the possibility of controlling the vehicle. Slippage therefore represents a high risk for the users' safety.

The slippage phenomenon is, however, less destructive, though more probable, for the traction capability of the vehicle or of the tyre in the field of agricultural vehicles, where slippage can be tolerated, within certain limits, by the tyre/rim system without causing immediate and irreversible damages to the tyre and/or rim. However, there exists the need to monitor such slippage, in order to intervene timely, before the tyre can get damaged so as to require to be replaced, and thus prolong the useful life of the tyre. This allows to reduce the costs related to the tyre replacement as well as the costs related to a sudden unavailability of the vehicle during use thereof and, of course, the costs related to damages, to people or things, brought about by air loss with consequent loss of vehicle control.

Document WO2009070063A1 describes a device intended for monitoring the operation of a tyre and capable of detecting slippage between tyre and rim. Such device comprises an angular position sensor capable of detecting the angular position and the angular velocity of the tyre, and an accelerometer mounted on the tyre. A possible deviation between the acceleration measured by the accelerometer integral with the tyre and the measurements provided by the angular sensor integral with the rim allow to detect slippage between tyre and rim.

Document US7150187B2 describes a device intended for monitoring the operation of a tyre and capable of detecting deformation of the tyre. Such device comprises a light emitter and a light sensor, both of them being fixed to a rim. The light emitter is apt to emit a light bundle towards an inner region of the tyre in which high-reflectivity areas alternate with low-reflectivity areas. This region reflects the bundle towards the light sensor so that the deformation of the tyre can be detected on the basis of the differences in luminance detected by the light sensor.

Document JP2007278801A describes a device for detecting slippage between a tyre and a rim. Such device is mounted outside the tyre.

The Applicant has noticed that the known devices for detecting slippage are complex and require high computational calculation capacity.

The Applicant has therefore noticed that the prior art does not manage to simplify the slippage detection device and thus to make such device more reliable, and is also unable to reduce the calculation capacity required for processing the data provided by the device.

### Disclosure of the Invention

The object of the present invention is to solve the above-described technical problems.

According to the present invention, this object is achieved with a device for monitoring the operation of a tyre with the features mentioned in the following claims.

The following brief description of the invention is given in order to provide a basic understanding of some aspects of the invention.

According to a preferred embodiment of the present invention, the device for monitoring the operation of a tyre is contained in the tyre and comprises a processor, an electric power supply device and a device for detecting slippage between tyre and respective rim. Such slippage detection device comprises a colour sensor and an annular surface consisting of a plurality of sectors, wherein consecutive sectors have different colours. The colour sensor is apt to detect the colour of a light emitted by a suitable illuminator and reflected by one of the sectors of the annular surface.

According to a preferred embodiment, the colour sensor and the illuminator are integral with the rim, whereas the annular surface is integral with the tyre. When a slippage between tyre and rim occurs, the sensor will detect the colour of the light reflected by a new sector, thus detecting the slippage and the extent thereof.

According to another embodiment, the colour sensor and the illuminator are integral with the tyre and the annual surface is integral with the rim.

According to further embodiments, the monitoring device comprises a plurality of sensors adapted to detect parameters related to the operation of the tyre, for example pressure sensors, temperature sensors and motion sensors. The monitoring device further comprises a position detection device, at least one transmitting device and a memory device. The data detected by the monitoring device are preferably collected and processed in external devices, either local or remote, in order to conduct technical and economic analyses allowing to improve management of the tyre.

The claims are an integral part of the teaching provided herein in relation to the invention.

### Brief Description of the Drawings

These and other features and advantages of the present invention will be apparent from the following description of preferred embodiments, given by way of non-limiting examples, with reference to the annexed figures, in which elements having same or similar functions and structures are denoted by same or similar reference numerals, and in which:
Fig. 1 shows a sectional view of a tubeless tyre, mounted on a respective rim, and of device for monitoring the operation of the tyre, according to a first embodiment of the present invention;
Fig. 1a shows a sectional view of the tyre of Fig. 1 taken along the line A-A, in the directions indicated by the arrows, according to the present invention;
Fig. 2 shows a sectional view of a tubeless tyre, mounted on a respective rim, and of a device for monitoring the operation of the tyre, according to a further embodiment of the present invention; and

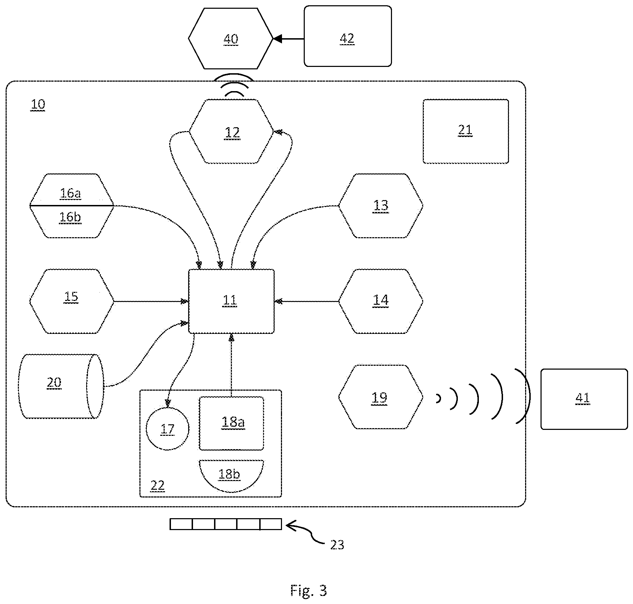

Fig. 3 shows a diagram of a device for monitoring the operation of a tubeless tyre according to the present invention.

### Description of Preferred Embodiments

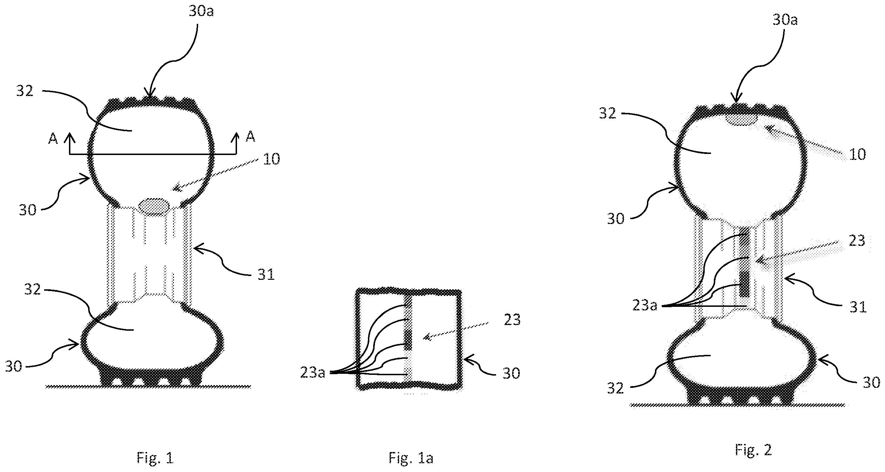

Referring to Figs. 1 and 1a, a monitoring device 10, 23 for monitoring operation of a tyre 30 comprises a control unit 10 and an annular surface 23.

The tyre 30, preferably a tyre of the tubeless type, i.e. without inner tube, is mounted on a corresponding rim 31 and comprises a tread 30a. The tyre 30 and the rim 31 define a chamber 32 arranged for receiving an inflating gas.

The control unit 10 and the annular surface 23 are arranged inside the chamber 32 of the tyre 30. Preferably, the control unit 10 is integrally fixed to the rim 31 and, similarly, the surface 23 is integrally fixed to an inner surface of the tyre 30. More preferably, the annular surface 23 is attached to an inner surface of the tyre 30 at the tread 30a.

According to another embodiment, the control unit 10 is integrally fixed to an inner surface of the tyre 30, at the tread 30a, and the annular surface 23 is integrally fixed to the rim 31, as shown in Fig. 2.

Preferably, the control unit 10 consists of a single printed circuit board and comprises, preferably, a processor 11, a plurality of sensors for detecting the operation parameters of the tyre, a position detection device 13, at least one receiving and transmitting device 12, 19, a memory device 20 and an electric power supply device 21.

The sensors of the control unit 10 comprise, for instance, a pressure sensor 14, a temperature sensor 15, an accelerometer 16a, a gyroscope 16b and a colour sensor 18a.

Preferably, the control unit 10 is contained in a plastic case, which is attached, for example by means of elastic rivets, to a corresponding support, made, for instance, of rubber. Such support is in turn attached, for instance by means of suitable adhesives and mechanical fasteners, to the rim 31.

The processor 11, preferably a processor with very low consumption, is configured to actuate the various sensors which are present in the control unit 10, for storing and possibly processing the data provided by said sensors as well as actuating the transmitting devices 12, 19. The processor 11 is further configured to maintain at least a basic functionality for long periods and, if necessary, resume its normal operation at programmed intervals or if other components of the control unit 10 so require.

The temperature sensor 15 is configured to detect the temperature of the environment inside the tyre 30, preferably with a resolution equal to one degree, and to provide a digital signal indicative of said temperature.

The pressure sensor 14 is configured to detect the air pressure inside the tyre 30 and to provide a digital signal indicative of said pressure. Preferably, in order to obtain a temperature-compensated measure of pressure, the pressure sensor 14 uses the signal provided by the temperature sensor 15.

The colour sensor 18a is configured to detect the colour of one of the sectors 23a forming the annular surface 23. The annular surface 23 is in fact constituted by a plurality of colored areas 23a as explained in greater detail below. A lens 18b is coupled to the colour sensor 18a and allows it to focus on a particular sector 23a. The illuminator 17 is arranged to illuminate this particular sector 23a on which the colour sensor 18a is focused. The light incident on the sector 23a is reflected by the latter and detected by the colour sensor 18a that outputs a signal indicative of the colour of the reflected light and thus the colour of the illuminated sector 23a. The colour sensor 18a is a sensor suitable for detecting the colour of a sector 23a situated, for example, up at a distance of about 80 cm, so as to operate correctly with tyres having a wide range of dimensions.

Preferably, the illuminator 17 is a visible light LED and is controlled by the processor 11 in order to generate a pulsed light. A read cycle, during which the LED 17 is turned on to allow the detection of the colour of the sector 23a by the colour sensor 18a, has, preferably, a duration of 100 ms.

As previously mentioned, the annular surface 23 is constituted by a plurality of colour sectors 23a. Said sectors 23a have a length such as to subtend a certain angle, equal to the desired angular resolution of slippage. A preferred value of this angular resolution is about 30 degrees.

Consecutive sectors of the annular surface 23 have different colours. For example, the sectors 23a may have two different colours alternating with each other, or they may have N (where N>2) different colours that are repeated every N sectors.

The annular surface 23 is obtained, for instance, by applying an annular band to the tyre inner surface, at the tread 30a, by means known to the person skilled in the art, such as adhesives. The annular band may comprise, for example, a plastic tape.

According to another embodiment, it is possible to obtain the annular surface 23 by applying a layer of paint directly to the inner part of the tread 30a. Similarly to what has been said for the annular band, the corresponding sectors 23a obtained by applying paint can have two or more different colours.

Moreover, it also possible to provide that the different colours are attained by applying the paint in order to obtain a given sector and omitting the paint layer for a subsequent sector, provided that the paint and the inner part of the tread 30a on which the paint is not applied have different colours and/or different light reflection properties.

As previously mentioned, a further embodiment provides that the annular surface 23 is applied to the rim 31. Similarly to what has been said above, it is possible to use an annular band applied to the rim 31 or to apply layers of paint to the rim 31.

The colour sensor 18a, the respective lens 18b, and the illuminator 17, together with the annular band 23, constitute a slippage detection device 22, 23 for detecting slippage between the tyre 30 and the respective rim 31.

The accelerometer 16a is, preferably, a triaxial accelerometer, adapted to detect the accelerations undergone by the tyre 30 along three mutually orthogonal directions.

The gyroscope 16b is adapted to detect the angular velocity of the tyre. This data is used by the processor 11 to determine the centrifugal component of acceleration to be subtracted from the accelerations detected by the triaxial accelerometer 16a and thus get data indicative of the net acceleration of the tyre 30. Such data can be used, for example, by the processor 11, for determining a qualitative index of the type of road surface (for example, ground or asphalt) on which the tyre 30 has acted.

The position detection device 13 is adapted to receive information about the geographical coordinates of the tyre 30. Preferably, such device comprises a GPS module, for example based on the CSR Sirf V technology, and includes a passive antenna adapted to receive signals from a network of dedicated artificial satellites. Preferably, the signals received by the antenna are suitably amplified by a low noise amplifier (LNA). The GPS module is also equipped with a non-volatile memory to contain data for detecting the position of the tyre, thus forming an assisted GPS module of known type. Such data useful for location detection are transmitted, for instance by a dedicated server through a mobile phone network, for example a GPRS network, or they are data generated by the same GPS module and are used to reduce the time required to carry out a first localization of the GPS module.

A first receiving and transmitting device 12 included in the control unit 10 is, for example, a 2G GPRS module, adapted to communicate the data detected by the various sensors of the control unit 10 and the data processed by the processor 11 to a remote management server 42, which is provided with respective processing devices and of transceiving devices 40. The GPRS module includes an antenna, for example a PIFA antenna, and a SIM card. Preferably, the communication between the GPRS module and the external server is carried out by means of the TCP protocol.

A second receiving and transmitting device 19 included in the control unit 10 is, for example, a device that uses the Bluetooth standard for short-range communication with a local device 41, for commercial or industrial use, equipped with the same communication technology. Such local device 41, equipped with respective processing devices, can be, for example, a PC or a smartphone. More preferably, the device 19 uses the Bluetooth low energy standard, which is capable of attaining low energy consumption compared to classic Bluetooth technology.

According to a further embodiment, at least part of the data transmitted by the monitoring device 10, 23 are also displayed on a respective vehicle equipped with tyres provided with the said monitoring device. Such displaying is effected, for example, by means of suitable displays or warning lights which indicate, for example, the critical values of a particular parameter that has been detected.

The memory device 20 is adapted to contain the history of the data detected by the sensors of the control unit 10, the data concerning the position of the tyre or the data processed by the processor 11 and concerning, for example, the slippage of the tyre 30 relative to the rim 31 or concerning the type of road surface on which the tyre 30 has acted. Preferably, the memory device 20 is a non-volatile memory, capable of preserving the stored data also in case of absence of electric power supply for the control unit 10.

Finally, the electric power supply device 21, adapted to provide power to the active components of the control unit 10, is preferably a high-capacity battery, which requires no battery charge.

The operation of the monitoring device 10, 23 described so far is as follows.

A first function of the monitoring device 10, 23 is the detection of slippage between tyre 30 and rim 31, by means of the respective slippage detection device 22, 23.

As previously described, the slippage detection device 22, 23 detects the colour of a sector 23a of the annular surface 23. A first detection is effected upon installation of the monitoring device. Subsequent measurements are performed at predetermined time intervals. It is, in fact, not necessary that the detection takes place during slippage, but it can be effected after slippage has occurred. In this case it will be necessary to provide an annular surface 23 whose sectors 23a have each a different color, so as to unequivocally associate a detected color to a corresponding slippage.

Alternatively, the control unit 10 can be programmed to continuously supply the slippage detection device, in order to detect slippage in the moment when it occurs.

The data relating to a possible slippage are stored in the memory device 20 for being communicated later, or, alternatively, it is possible to set the control unit 10 so as to effect immediate transmission of such data in case a slippage exceeding a certain predetermined limit value occurs.

A second function of the device is the detection of data relating to pressure and working temperature of the tyre 30. Such data are detected, by means of the respective pressure sensor 14 and temperature sensor 15, at predetermined time intervals, for example every 60 minutes. This time can be changed as needed, as a function of different parameters or requirements. The detected data are stored in the memory device 20.

Preferably, each pressure or temperature detection carried out by the control unit 10 is the result of the processing of a series of consecutive measurements, which are suitably filtered and averaged in order to avoid oscillations of the detected values, because of possible measures in transient state, that would make the detected data poorly significant.

The monitoring device 10, 23 also allows to set the pressure and/or temperature limit values, above which it is possible to trigger the automatic transmission of the achieved values.

Another function of the monitoring device 10, 23 forming the subject-matter of the present invention is to determine the qualitative index of the type of road surface. This index is calculated, for example by the processor 11, on the basis of the data detected by the accelerometer 16a and the triaxial gyroscope 16b. The index assumes, for instance, values ranging on a scale from one to five. One of the two extreme values, for example the value five, indicates a particularly homogeneous road surface, with a substantial absence of vibrations; the other extreme value, or the value one, indicates an extremely bumpy road, with continuous mechanical stresses on the tyre 30.

The qualitative index of the type of road surface calculated by the processor 11 is stored in the memory device 20. In this case, too, it is possible to set a threshold value for the index, after which the processor 11 triggers the automatic transmission of the calculated index.

A further function of the monitoring system 10, 23 is the recording, by means of the GPS and GPRS modules, of sites of use of the tyre 30, in order to conduct subsequent economic and/or technical analyses.

The GPS and GPRS modules are also used to perform the satellite alarm function. Such function can be activated, for example, by sending an SMS message and the data relating to the position of the tyre are transmitted, for example, via GPRS or, in case of absence of the GPRS network coverage, via SMS. The transmission of the data relative to the position of the tyre is interrupted only when the battery 21 becomes exhausted or if the control unit 10 receives a specific inhibition command.

Finally, the transmission of data to external devices such as remote management servers 42 or local devices 40, such as smartphones and PC, allows to have available a series of functional and logistic parameters to be used for conducting analyses, both economic and technical ones, on the use of the vehicle or, more advantageously, of a fleet of vehicles, fitted with tyres having a monitoring device according to the present invention. For example, it is possible to conduct analyses relating to the times of use of the vehicles, to their method of use, for example on the ground or on asphalt, the types of workings carried out, the sites of use of the vehicles, and also centrally manage the interventions of maintenance on the vehicles of the fleet.

The monitoring device 10, 23 for monitoring the operation of a tyre 30, which is the subject-matter of the present invention, provides several advantages.

A first advantage lies in the fact that the monitoring device 10, 23 can be mounted by a tyre installer and therefore does not require any intervention by an operator who drives or manages a vehicle fitted with tyres equipped with such monitoring devices.

A second advantage is due to the internal electric power supply, which allows not to use rotating collectors for the realization of the electrical contacts between the internal sensors of the tyre and a battery of a vehicle, external to the tyre.

Another advantage is related to the particular configuration of the slippage detection device 22, 23. Indeed, said device does not require the installation of electronic devices in proximity to the edges of the tyre 30 and this allows to reduce the risks of damage to the device itself, due to use of linkages which act on such edges during the operations of assembly and disassembly of the tyre.

Such slippage detection device 22, 23 is also simple and therefore it is not subject to failure, since it has a single electronic sensor, namely the colour sensor 18a, in contrast to the known devices, which have multiple motion sensors. The operation of the device also allows to obtain more reliable slippage measurements, not influenced by movements and vibrations. In fact, as already shown, slippage detection may take place after slippage has occurred and when the tyre is not in motion.

A further advantage obtainable by means of the monitoring device 10, 23 is the economic saving which can be obtained by monitoring the operation parameters of the tyre. In fact, the detection of the pressure, temperature and, mainly, slippage of the tyre allows to carry out maintenance interventions that have the effect of prolonging the useful life of the tyre. Moreover, the monitoring of the operation of the tyre allows to obtain a reduction of fuel consumption and an optimization of working times, which both contribute to the economic savings associated with the use of the monitoring device.

A further advantage of the monitoring device 10, 23 is due to its arrangement in the tyre 30, which allows detection of the position of the tyre itself. This allows to have a an antitheft device for each tyre, which is also difficult to tamper, unlike the traditional antitheft devices, placed on board of vehicles, which are subject to possible tampering and are not suitable to protect from theft of individual tyres.

In a particular embodiment of the invention, the monitoring device advantageously comprises, in addition to the accelerometer 16a integrated in the control unit 10, an accessory unit comprising a further accelerometer and a corresponding transmitting device. Such accessory unit will be fixed, in an integral manner, to the rim or to the tyre, depending on whether the control unit 10 is fixed to the tyre or the rim, respectively.

This particular embodiment, by simultaneously measuring both the acceleration of the rim and that of the tyre, will allow to detect any differences between the two accelerations. Advantageously, the detection of the difference between the acceleration of the rim and that of the tyre, in addition to allowing monitoring of the tyre slippage, provides further possibilities of use, including monitoring of a possible twisting of the tyre.

Of course, obvious changes and/or variations are possible to the above description, in dimensions, shapes, materials, components, circuit elements, connections and contacts, as well as in the details of the circuitry, of the illustrated construction and of the method of operation without departing from the invention as claimed in the following claims.

## Claims

1. Device (10, 23) for monitoring the operation of a tyre (30) mounted on a respective rim (31), said device (10, 23) being arranged inside a chamber (32) delimited by the tyre (30) and by the respective rim (31), said device comprising:
- a device (22, 23) for detecting slippage between said tyre (30) and said rim (31),
- a processor (11),
- an electric power supply device (21) adapted to supply said processor (11) and said device (22, 23) for detecting the slippage,
**characterized in that** said device (22, 23) for detecting the slippage comprises:
- a colour sensor (18a),
- an illuminator (17), and
- an annular surface (23) having a plurality of sectors (23a), wherein consecutive sectors have different colours, said illuminator (17) being adapted to emit a light incident on one of said sectors (23a) of said annular surface (23), said colour sensor (18a) being adapted to detect a light reflected by said sector (23a) illuminated by said incident light and to provide a signal indicative of the colour of said reflected light.

2. Device according to claim 1, wherein said annular surface (23) is integral with said rim (31) and said colour sensor (18a) is integral with said tyre (30), or vice versa.

3. Device according to claims 1 or 2, wherein said annular surface (23) is obtained by applying a layer of a material on an inner part of said tyre (30) or on said rim (31) .

4. Device according to any one of the preceding claims, wherein said sectors (23a) of said annular surface (23) have a length such as to subtend an angle equal to the desired resolution for detecting said slippage.

5. Method for monitoring the operation of a tyre (30) by means of a device (22, 23) for detecting slippage of said tyre (30) with respect to a respective rim (31),
said device (22, 23) being arranged inside a chamber (32) delimited by the tyre (30) and by the respective rim (31) and comprising a colour sensor (18a) and an annular surface (23) having a plurality of sectors (23a), wherein consecutive sectors have different colours, said colours being detectable by said colour sensor (18a),
said method comprising the steps of:
- providing a processor (11) arranged inside the chamber (32) ;
- providing an electric power supply device (21) adapted to supply at least said processor (11) and said device (22, 23) for detecting the slippage;
- providing at least one transmitting device (12, 29);
- providing at least one receiving device (40, 41) outside said tyre (30);
- detecting, by means of said device (22, 23) for detecting the slippage, data indicative of the slippage between said tyre (30) and said respective rim (31);
- transmitting, by means of said at least one transmitting device (12, 19), at least said data indicative of said slippage;
- receiving, by means of said at least one receiving device (40, 41), data transmitted by said at least one transmitting device (12, 19).

6. Method according to claim 5, further comprising the steps of:
- providing, inside said chamber (32), at least one sensor comprised in the group consisting of:
- a pressure sensor (14),
- a temperature sensor (15),
- a triaxial accelerometer (16a), and
- a gyroscope (16b);
- providing, inside said chamber (32), a position detection device (13);
- providing a memory device (20);
- detecting, by means of said at least one sensor (14, 15, 16a, 16b), data indicative of the operation of the tyre (30) ;
- detecting, by means of said position detection device (13), positions where said tyre (30) is located;
- storing, in said memory device (20), said data indicative of the slippage, said data indicative of the operation of the tyre (30) and said positions of the tyre (30).

7. Method according to claim 6, further comprising the steps of:
- processing data detected by said triaxial accelerometer (16a) and by said gyroscope (16b) in order to obtain data indicative of a net acceleration of the tyre (30);
- calculating, starting from said data indicative of the net acceleration of the tyre (30), a qualitative index indicative of the types of surfaces on which said tyre (30) acts.

8. Method according to claim 7, further comprising the steps of:
- transmitting, by means of said at least one transmitting device (12, 19), data indicative of the operation of the tyre (30), detected by said at least one sensor (14, 15, 16a, 16b), positions where said tyre (30) is located, detected by said position detection device (13), and qualitative indices indicative of the types of surfaces on which said tyre (30) acts;
- receiving, by means of said at least one receiving device (40, 41), said data, positions and indices.

9. Method according to claim 7, further comprising the steps of:
- providing threshold values at least of the data indicative of the slippage, of the data indicative of the operation of the tyre (30) and of the qualitative index of the types of surfaces on which said tyre acts;
- automatically activating said at least one transmitting device (12, 19) in order to transmit said detected data and said indices if they turn out to be above said threshold values;
- receiving, by means of said at least one receiving device (40, 41), said data and indices.

10. Method according to claim 8 or 9, further comprising the steps of:
- analysing, by means of at least one processing device (41, 42), said data received by means of said at least one receiving device (40, 41);
- managing activities of maintenance of the tyre (30) on the basis of the analysed data.

## Patentansprüche

1. Vorrichtung (10, 23) zum Überwachen des Betriebs eines Reifens (30), der auf eine entsprechende Felge (31) montiert ist, wobei die Vorrichtung (10, 23) in einer Kammer (32) angeordnet ist, die von dem Reifen (30) und der entsprechenden Felge (31) begrenzt ist, wobei die Vorrichtung aufweist:
- eine Vorrichtung (22, 23) zum Detektieren von Schlupf zwischen dem Reifen (30) und der Felge (31),
- einen Prozessor (11),
- eine elektrische Stromversorgungsvorrichtung (21), die dafür vorgesehen ist, den Prozessor (11) und die Vorrichtung (22, 23) zum Detektieren von Schlupf zu versorgen,
**dadurch gekennzeichnet, dass** die Vorrichtung (22, 23) zum Detektieren von Schlupf aufweist:
- einen Farbsensor (18a),
- einen Beleuchter (17), und
- eine ringförmige Fläche (23), die mehrere Sektoren (23a) aufweist, wobei aufeinanderfolgende Sektoren unterschiedliche Farben haben,
wobei der Beleuchter (17) dafür vorgesehen ist, Licht auszusenden, das auf einen der Sektoren (23a) der ringförmigen Fläche (23) auftrifft, wobei der Farbsensor (18a) dafür vorgesehen ist, Licht zu detektieren, das von dem durch das einfallende Licht beleuchteten Sektor (23a) reflektiert wurde, und ein Signal zu erzeugen, das die Farbe des reflektierten Lichts angibt.

2. Vorrichtung nach Anspruch 1, wobei die ringförmige Fläche (23) integral mit der Felge (31) ausgebildet ist und der Farbsensor (18a) integral mit dem Reifen (30) ausgebildet ist, oder umgekehrt.

3. Vorrichtung nach Anspruch 1 oder 2, wobei die ringförmige Fläche (23) erhalten wird, indem eine Schicht aus einem Material auf einen inneren Teil des Reifens (30) oder auf die Felge (31) aufgebracht wird.

4. Vorrichtung nach einem der vorstehenden Ansprüche, wobei die Sektoren (23a) der ringförmigen Fläche (23) eine Länge haben, sodass sie einen Winkel überstreichen, welcher der gewünschten Auflösung zum Delektieren von Schlupf entspricht.

5. Verfahren zum Überwachen des Betriebs eines Reifens (30) mittels einer Vorrichtung (22, 23) zum Detektieren von Schlupf des Reifens (30) in Bezug auf eine entsprechende Felge (31),
wobei die Vorrichtung (22, 23) in einer Kammer (32) angeordnet ist, die von dem Reifen (30) und der entsprechenden Felge (31) begrenzt ist, und einen Farbsensor (18a) sowie eine ringförmige Fläche (23), die mehrere Sektoren (23a) hat, aufweist, wobei aufeinander folgende Sektoren verschiedene Farben haben, und wobei die Farben mittels des Farbsensors (18a) detektierbar sind,
wobei das Verfahren die Schritte aufweist:
- Vorsehen eines Prozessors (11), der in der Kammer (32) angeordnet ist,
- Vorsehen einer elektrischen Stromquelle (21), die dafür ausgelegt ist, zumindest den Prozessor (11) und die Vorrichtung (22, 23) zum Detektieren von Schlupf zu versorgen,
- Vorsehen wenigstens einer Sendeeinrichtung (12, 29),
- Vorsehen wenigstens einer Empfangseinrichtung (40, 41) außerhalb des Reifens (30),
- Detektieren von Daten, die den Schlupf zwischen dem Reifen (30) und der Felge (31) anzeigen, mittels der Vorrichtung (22, 23) zum Detektieren von Schlupf,
- Übertragen zumindest der Daten, die Schlupf anzeigen, mittels der wenigstens ein Sendeeinrichtung (12, 19),
- Empfangen von Daten, die von der wenigstens einen Sendeeinrichtung (12, 19) ausgesandt wurden, mittels der wenigstens einen Empfangseinrichtung (40, 41).

6. Verfahren nach Anspruch 5, zusätzlich mit den Schritten:
- Vorsehen in der Kammer (32) wenigstens eines Sensors, der in der Gruppe enthalten ist, die besteht aus:
o einem Drucksensor (14)
o einem Temperatursensor (15),
o einem triachsialen Beschleunigungssensor (16a), und
o einem Gyroskop (16b),
- Vorsehen einer Positionserkennungsvorrichtung (13) in der Kammer (32),
- Vorsehen einer Speichervorrichtung (20),
- Detektieren mittels wenigstens eines Sensors (14, 15, 16a, 16b) von Daten, die den Betrieb des Reifens (30) anzeigen,
- Detektieren von Positionen, in denen der Reifen (30) angeordnet ist, mittels der Positionserkennungsvorrichtung (13),
- Speichern der Daten, die Schlupf anzeigen, und Daten, die den Betrieb des Reifens (30) anzeigen, sowie der Positionen des Reifens (30) in der Speichervorrichtung (20).

7. Verfahren nach Anspruch 6, zusätzlich mit den Schritten:
- Verarbeiten von Daten, die von dem triachsialen Beschleunigungssensor (16a) und dem Gyroskop (16b) erfasst wurden, um Daten zu erhalten, die eine reine Beschleunigung des Reifens (30) angeben,
- Berechnen eines qualitativen Indexes, der die Arten von Oberflächen angibt, auf die der Reifen (30) einwirkt, ausgehend von den Daten, welche die reine Beschleunigung des Reifens (30) angeben.

8. Verfahren nach Anspruch 7, zusätzlich mit den Schritten:
- Übertragen von Daten, die den Betrieb des Reifens (30) anzeigen und von dem wenigstens einen Sensor (14, 15, 16a, 16b) erfasst wurden, Positionen, in denen der Reifen (30) angeordnet ist und die von der Positionserkennungsvorrichtung (13) erfasst wurden, und qualitative Indices, welche die Arten von Oberflächen angeben, auf welche der Reifen (30) einwirkt, mittels der wenigstens einen Sendeeinrichtung (12, 19),
- Empfangen von den Daten, Positionen und Indices mittels der wenigstens einen Empfangseinrichtung (40, 41).

9. Verfahren nach Anspruch 7, zusätzlich mit den Schritten:
- Vorgeben von Schwellenwerten für mindestens die Daten, die den Schlupf angeben, die Daten, die den Betrieb des Reifens (30) anzeigen und für den qualitativen Index der Arten von Oberflächen, auf die der Reifen wirkt,
- automatisches Aktivieren der wenigstens einen Sendevorrichtung (12, 19), um die detektierten Daten und Indices zu übertragen, wenn sie oberhalb der Schwellenwerte liegen,
- Empfangen der Daten und Indices mittels der wenigstens einen Empfangsvorrichtung (40, 41).

10. Verfahren nach Anspruch 8 oder 9, zusätzlich mit den Schritten:
- Analysieren der Daten, die mittels der wenigstens einen Empfangsvorrichtung (40, 41) empfangen wurden, mittels der wenigstens einen Auswertevorrichtung (41, 42),
- Steuern von Wartungsarbeiten des Reifens (30) auf der Grundlage der analysierten Daten.

## Revendications

1. Dispositif (10, 23) pour surveiller le fonctionnement d'un pneu (30) monté sur une jante (31) respective, ledit dispositif (10, 23) étant agencé à l'intérieur d'une chambre (32) délimitée par le pneu (30) et par la jante (31) respective, ledit dispositif comprenant :
- un dispositif (22, 23) pour détecter un glissement entre ledit pneu (30) et ladite jante (31),
- un processeur (11),
- un dispositif d'alimentation électrique (21) adapté pour alimenter ledit processeur (11) et ledit dispositif (22, 23) pour détecter le glissement, **caractérisé en ce que** ledit dispositif (22, 23) pour détecter le glissement comprend :
- un capteur de couleur (18a),
- un illuminateur (17), et
- une surface annulaire (23) ayant une pluralité de secteurs (23a), dans lequel des secteurs consécutifs ont des couleurs différentes, ledit illuminateur (17) étant adapté pour émettre une lumière incidente sur l'un desdits secteurs (23a) de ladite surface annulaire (23), ledit capteur de couleur (18a) étant adapté pour détecter une lumière réfléchie par ledit secteur (23a) illuminé par ladite lumière incidente et pour fournir un signal indicatif de la couleur de ladite lumière réfléchie.

2. Dispositif selon la revendication 1, dans lequel ladite surface annulaire (23) est d'un seul tenant avec ladite jante (31) et ledit capteur de couleur (18a) est d'un seul tenant avec ledit pneu (30), ou vice versa.

3. Dispositif selon les revendications 1 ou 2, dans lequel ladite surface annulaire (23) est obtenue en appliquant une couche d'un matériau sur une partie intérieure dudit pneu (30) ou sur ladite jante (31).

4. Dispositif selon l'une quelconque des revendications précédentes, dans lequel lesdits secteurs (23a) de ladite surface annulaire (23) ont une longueur de nature à sous-tendre un angle égal à la rotation souhaitée pour détecter ledit glissement.

5. Procédé pour surveiller le fonctionnement d'un pneu (30) au moyen d'un dispositif (22, 23) pour détecter un glissement dudit pneu (30) par rapport à une jante (31) respective,
ledit dispositif (22, 23) étant agencé à l'intérieur d'une chambre (32) délimitée par le pneu (30) et par la jante (31) respective et comprenant un capteur de couleur (18a) et une surface annulaire (23) ayant une pluralité de secteurs (23a), dans lequel des secteurs consécutifs ont des couleurs différentes, lesdites couleurs pouvant être détectées par ledit capteur de couleur (18a),
ledit procédé comprenant les étapes de :
- fourniture d'un processeur (11) agencé à l'intérieur de la chambre (32) ;
- fourniture d'un dispositif d'alimentation électrique (21) adapté pour alimenter au moins ledit processeur (11) et ledit dispositif (22, 23) pour détecter le glissement ;
- fourniture d'au moins un dispositif de transmission (12, 29) ;
- fourniture d'au moins un dispositif de réception (40, 41) à l'extérieur dudit pneu (30) ;
- détection, au moyen dudit dispositif (22, 23) pour détecter le glissement, de données indicatives du glissement entre ledit pneu (30) et ladite jante (31) respective ;
- transmission, au moyen dudit au moins un dispositif de transmission (12, 19), au moins desdites données indicatives dudit glissement ;
- réception, au moyen dudit au moins un dispositif de réception (40, 41), de données transmises par ledit au moins un dispositif de transmission (12, 19).

6. Procédé selon la revendication 5, comprenant en outre les étapes de :
- fourniture, à l'intérieur de ladite chambre (32), d'au moins un capteur compris dans le groupe consistant en :
- un capteur de pression (14),
- un capteur de température (15),
- un accéléromètre triaxial (16a), et
- un gyroscope (16b) ;
- fourniture, à l'intérieur de ladite chambre (32), d'un dispositif de détection de position (13) ;
- fourniture d'un dispositif de mémoire (20) ;
- détection, au moyen dudit au moins un capteur (14, 15, 16a, 16b), de données indicatives du fonctionnement du pneu (30) ;
- détection, au moyen dudit dispositif de détection de position (13), de positions où ledit pneu (30) est situé ;
- stockage, dans ledit dispositif de mémoire (20), desdites données indicatives du glissement, desdites données indicatives du fonctionnement du pneu (30) et desdites positions du pneu (30).

7. Procédé selon la revendication 6, comprenant en outre les étapes de :
- traitement de données détectées par ledit accéléromètre triaxial (16a) et par ledit gyroscope (16b) afin d'obtenir des données indicatives d'une accélération nette du pneu (30) ;
- calcul, en partant desdites données indicatives de l'accélération nette du pneu (30), d'un indice qualitatif indicatif des types de surfaces sur lesquelles ledit pneu (30) agit.

8. Procédé selon la revendication 7, comprenant en outre les étapes de :
- transmission, au moyen dudit au moins un dispositif de transmission (12, 19), de données indicatives du fonctionnement du pneu (30), détectées par ledit au moins un capteur (14, 15, 16a, 16b), de positions où ledit pneu (30) est situé, détectées par ledit dispositif de détection de position (13), et d'indices qualitatifs indicatifs des types de surfaces sur lesquelles ledit pneu (30) agit ;
- réception, au moyen dudit au moins un dispositif de réception (40, 41), desdits données, positions et indices.

9. Procédé selon la revendication 7, comprenant en outre les étapes de :
- fourniture de valeurs seuils au moins des données indicatives du glissement, des données indicatives du fonctionnement du pneu (30) et de l'indice qualitatif des types de surfaces sur lesquelles ledit pneu agit ;
- activation automatique dudit au moins un dispositif de transmission (12, 19) afin de transmettre lesdites données détectées et lesdits indices s'ils se révèlent supérieurs auxdites valeurs seuils ;
- réception, au moyen dudit au moins un dispositif de réception (40, 41), desdits données et indices.

10. Procédé selon la revendication 8 ou 9, comprenant en outre les étapes de :
- analyse, au moyen d'au moins un dispositif de traitement (41, 42), desdites données reçues au moyen dudit au moins un dispositif de réception (40, 41) ;
- gestion d'activités d'entretien du pneu (30) sur la base des données analysées.
